# EUROPEAN PATENT APPLICATION

(11) **EP 3 034 907 A1**
(43) Date of publication of application: **22.06.2016**
(21) Application number: 14836257.7
(22) Date of filing: 06.08.2014
(51) Int. Cl.: F16H 1/28, F16H 1/34

(54) **REDUCER**

(30) Priority: 12.08.2013 KR 20130095108; 04.02.2014 KR 20140012521
(71) Applicant: Sambo Motors Co. Ltd., Daegu 704-833 (KR)
(72) Inventor: KIM, Hyun Chan, Anyang-si Gyeonggi-do 430-805 (KR); PARK, Jun Young, Seoul 137-779 (KR)
(74) Representative: Zech, Stefan Markus
(86) International application number: PCT/KR2014/007294
(87) International publication number: WO 2015/023080

(57) **Abstract**

The present invention relates to a reducer comprising: a first body having first internal teeth formed therein; a first external gear part having first external teeth engaged with the first internal teeth, the number of teeth of the first external teeth is smaller than that of the first internal teeth; a second external gear part which has second external teeth formed therein and is formed on one side of the first external gear part to be coaxially rotated integrally with the first external gear part; an input part, which is coupled with the first body while being rotatably inserted therethrough and has an eccentric shaft part protruding from one side of the input part to be eccentric to the center of a shaft, at least one of the first external gear part and the second external gear part being rotatably coupled to the eccentric shaft part; an output part having second internal teeth engaged with the second external teeth and formed therein; and a second body surrounding at least a part of the outer portion of the output part while being coupled to the first body.

## Description

### TECHNICAL FIELD

The present invention relates to a reducer, and more particularly, to a reducer on which tooth of gears having internal tooth portions and external tooth portions that are included in the reducer are formed as involute tooth.

### BACKGROUND ART

In general, a reducer is a power transmission device that outputs a low speed rotation force from a high speed rotation force that is input from a power device such as a motor. The reducer is mounted, for example, on a joint of a robot for industry and serves to reduce a high speed rotation force to be input from a power device to a proper rotation force required at a power demand place.

The reducer has been developed as various sorts depending on a manner of reducing speed. For example, the reducer is classified as a harmonic reducer, a cyclo reducer, a revolutionary vector (RV) reducer, a ball reducer and a planetary gear reducer, etc.

The harmonic reducer includes generally a circular spline on which gears of internal tooth are formed and a flexible spline on which gears of external tooth to be meshed with the gear of internal tooth on the circular spline are formed wherein the input high speed rotation force is reduced to the low speed rotation force by using the relative rotation caused from the difference of the tooth numbers of the gears on the circular spline and the flexible spline.

The cyclo reducer includes generally pin gears and eccentric gears on which cycloid tooth are formed and which is rotated relatively by a crank shaft wherein the input high speed rotation force is reduced to the low speed rotation force by using the relative rotation caused from the difference of the tooth numbers of the pin gears and the eccentric gears.

The planetary gear reducer includes generally a plurality of gears that are rotated with being meshed each other wherein the input high speed rotation force is reduced to the low speed rotation force by using a tooth ratio of gears on input side and output side.

The ball reducer includes a first power plate and a second power plate that are arranged in an opposite direction, a guide groove that is formed in a cycloid curve on an opposite plate surface facing to the first and second power plates and a driving ball that is roll-moved along the guide groove wherein the input high speed rotation force is reduced to the low speed rotation force by using the relative rotation of the first and second power plates, which is caused while the driving ball moves along the guide groove.

Recently, the reducer has been widely used in various fields of human body as well as robot for industry, and in order for the reducer to be used in various fields it has to be miniaturized, driven stably, manufactured easily and constructed simply.

However, there are many problems to be solved in the existing conventional reducers in order to achieve the miniaturization, the stable driving, the easy manufacturing and the simple construction thereof. For example, it is difficult to achieve the relatively stable driving in a case of the harmonic reducer due to rigidity and vibration characteristics even though it is relative easy to be miniaturized. In a case of the cyclo reducer since the driving torque is relatively large and the backlash is small, it is driven stably, whereas the cycloid tooth is not easy to be manufactured, the mechanical device such as output shaft pin and output shaft bush, etc., for making again an output shaft to be coaxial with an input shaft so as to transmit smoothly power to the output shaft is required, the structure is complicated, and the miniaturization is difficult. Further, in a case of the ball reducer it is difficult to process the cycloid curve formed on a plate surface of a power plate and thus the miniaturization thereof is not easy.

### DISCLOSURE

### TECHNICAL PROBLEM

An embodiment of the present invention is directed to a reducer which is a simple structure and manufactured easily.

### TECHNICAL SOLUTION

A reducer according to an embodiment of the present invention may include: a first body portion on which a first internal tooth is formed; a first external tooth gear portion on which a first external tooth which is meshed with the first internal tooth and the number of which is smaller than that of the first internal tooth is formed and in which the rotation speed of the first external tooth is reduced firstly while the first external tooth is tooth-engaged with the first internal tooth; a second external tooth gear portion on which a second external tooth is formed and which is formed on one side of the first external tooth gear portion to rotate integrally and coaxially with the first external tooth gear portion; an input portion which is connected rotatably through the first body portion and on one side of which an eccentric shaft portion that is eccentric from a shaft center and protrudes is formed wherein at least one of the first external tooth gear portion and the second external tooth gear portion is connected rotatably thereto; an output portion on which a second internal tooth to be meshed with the second external tooth is formed and in which the rotation speed of the second internal tooth is reduced secondly while the second internal tooth is tooth-engaged with the second external tooth; and a second body portion that surrounds at least a part of the external portion of the output portion while the second body portion is connected to the first body portion,
wherein the number of the second external tooth is smaller than that of the second internal tooth and the rotation centers of the input portion and the output portion are the same.

The first internal tooth and the first external tooth may be formed as involute tooth.

The difference of the numbers of the first internal tooth and the first external tooth may be 1 or 2.

The second internal tooth and the second external tooth may be formed as involute tooth.

The number of the second external tooth may be smaller than that of the first external tooth.

The number of the second external tooth may be smaller than that of the second internal tooth.

The difference of the numbers of the second external tooth and the second internal tooth may be 1 or 2.

A reducer according to another embodiment of the present invention may include: a first internal tooth gear portion on which a first internal tooth is formed; a first external tooth gear portion on which a first external tooth which is meshed with the first internal tooth is formed and in which the rotation speed of the first external tooth is reduced firstly while the first external tooth is tooth-engaged with the first internal tooth; a second external tooth gear portion on which a second external tooth is formed and which rotates integrally and coaxially with the first external tooth gear portion; an input portion on one side of which an eccentric shaft portion that is eccentric from a shaft center and protrudes is formed wherein at least one of the first external tooth gear portion and the second external tooth gear portion is connected rotatably to the eccentric shaft portion; a second internal tooth gear portion on which a second internal tooth which is meshed with the second external tooth is formed and in which the rotation speed of the second internal tooth is reduced firstly while the second internal tooth is tooth-engaged with the second external tooth; and an output portion to one side of which the second internal tooth gear portion is connected and which rotates together with the second internal tooth gear portion, wherein the number of the first external tooth is smaller than that of the first internal tooth, the number of the second external tooth is smaller than that of the second internal tooth, and the rotation centers of the input portion and the output portion are the same.

The reducer of the present invention may further include: a first body portion to one side of which a first internal tooth gear portion is connected and through which the input portion is connected rotatably; and a second body portion that is connected to the first body portion while the second body portion surrounds partly the external portion of the output portion.

The number of the first external tooth may be smaller than that of the first internal tooth by 1 or 2.

The number of the second external tooth may be smaller than that of the first external tooth and the number of the second external tooth may be smaller than that of the second internal tooth by 1 or 2.

The second external tooth gear portion may be formed integrally on one side of the first external tooth gear portion or may be manufactured separately and connected integrally thereto.

The revolution center of the second external tooth gear portion and the rotation center of the output portion may be corresponded, the rotation center and the revolution center of the second external tooth gear portion are corresponded to them of the first external tooth gear portion, and the rotation center of the second internal tooth gear portion which rotates with being meshed with the second external tooth gear portion is corresponded to the rotation center of the input portion so that the rotation center of the input portion is corresponded to the rotation center of the output portion.

A first bearing may be arranged between the first body portion and the input portion and a second bearing may be arranged between the rotation shaft portion of the input portion and the first external tooth gear portion or the second external tooth gear portion.

### ADVANTAGEOUS EFFECTS

According to the preset invention, the rotation center of an input portion is corresponded to the rotation center of an output portion by a simple structure including an external tooth gear portion of two stages without adopting a complicate structure for corresponding the rotation center of an output portion to the rotation center of an input portion.

Further, according to the present invention, the external tooth and the internal tooth are designed as involute tooth so that the reducer can be more easily manufactured comparing to a conventional reducer having cycloid tooth.

### BRIEF DESCRIPTION OF THE DRAWINGS

FIG. 1 is a perspective view of a reducer according to an embodiment of the present invention.
FIG. 2 is an exploded perspective view of the reducer shown in FIG. 1.
FIG. 3 is a cross-sectional view of the reducer shown in FIG. 1.

### BEST MODE FOR THE INVENTION

Exemplary embodiments of a reducer of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

Although terms like a first and a second are used to describe various components, but the components are not limited to these terms. These terms are used only to differentiate one component from another one, for example, the first component can be referred to as the second component, or the second component can be referred to as the first component, without departing from the scope of the present invention.

It also should be understood that when it is stated that one component is "connected or "coupled to another component, even though the one component may be directly connected or coupled to another component, but there may be other components between them. However, it has to be understood that when it is stated that one component is "directly connected" or "directly coupled" to another component, there is no intermediate component between them. The terms used for describing a relation among other components, that is, "between", "right between", "adjacent to" or "directly adjacent to" have to be construed similarly.

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention. Therefore, the configurations described in the embodiments and drawings of the present invention are merely most preferable embodiments but do not represent all of the technical spirit of the present invention. Thus, the present invention should be construed as including all the changes, equivalents, and substitutions included in the spirit and scope of the present invention at the time of filing this application.

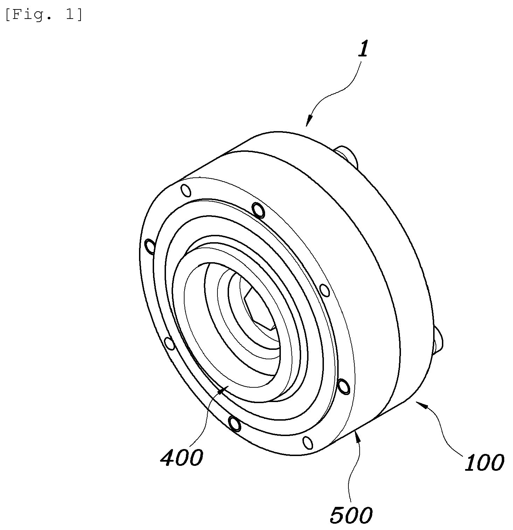

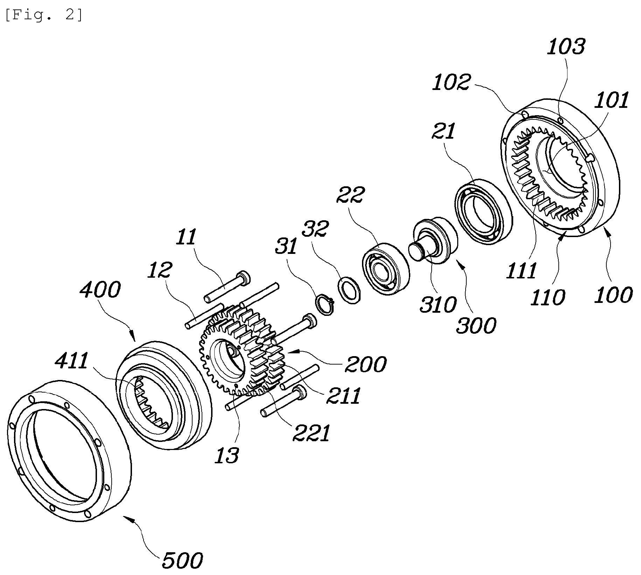

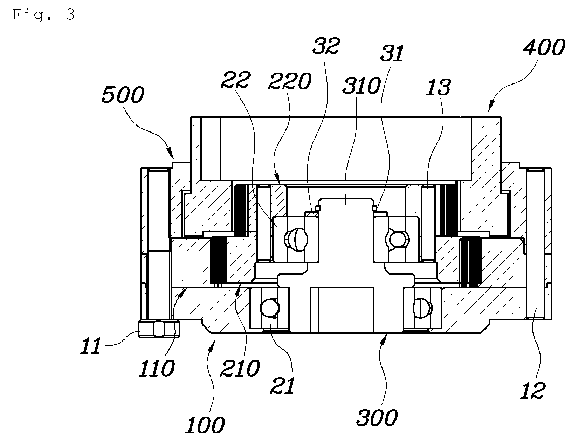

FIG. 1 is a perspective view of a reducer according to an embodiment of the present invention, FIG. 2 is an exploded perspective view of the reducer shown in FIG. 1, and FIG. 3 is a cross-sectional view of the reducer shown in FIG. 1.

As shown in the drawings, a reducer according to an embodiment of the present invention may include: a first body portion 100 on which an first internal tooth 111 are formed; a first external tooth gear portion 210 on which a first external tooth 211 which is meshed with the first internal tooth 111 and the number of which is smaller than that of the first internal tooth 111; a second external tooth portion 220 on which a second internal tooth 221 is formed and which is formed on one side of the first external tooth gear portion 210 and is rotated integrally and coaxially with the first external tooth gear portion 210; an input portion 300 which is connected rotatably through the first body portion 100 and on side of which an eccentric shaft portion 310 that is eccentric from a shaft center and protrudes is formed wherein at least one of the first external tooth gear portion 210 and the second external tooth gear portion 220 is connected rotatably to the eccentric shaft portion 310; an output portion 400 on which a second internal tooth 411 to be meshed with the second external tooth 221 is formed; and a second body portion 500 which surrounds at least a part of the external portion of the output portion 400 while it is connected to the first body portion 100.

The first body portion 100 may be fixed to a main body of a device on which the reducer 1 according to the present embodiment is installed together with a driving source (not shown). Here, a first hollow portion 101 through which an input portion 300 is inserted may be formed through the first body portion 100, and a bolt hole 102 and a pin hole 103 through which a fixing bolt 11 and a guide pin 12 pass to be connected, respectively, may be formed thereon.

Meanwhile, a first internal tooth 111 may be formed along a circumferential direction on an internal peripheral surface of one side of the first body portion 100. At this time, the first internal tooth 111 may be formed directly on the first body portion 100 itself, or a first internal tooth gear portion 110 on which the first internal tooth 111 is formed along a circumferential direction on an internal peripheral surface thereof is formed may be manufactured separately and connected to one side of the first body portion 100. In the later case, the fixing bolt 11 and the guide pin 12 may pass through to be connected thereto while the second body portion 500, the first internal tooth gear portion 110 and the first body portion 100 are arranged in order. Hereinafter, an example where the first internal tooth gear portion 110 is manufactured separately and connected to the first body portion 100 will be described as a reference.

A first external tooth 211 may be formed on an outer peripheral surface of the first external tooth gear portion 210. Here, the first external tooth gear portion 210 is connected to the first internal tooth gear portion 110 to form a gear connection structure where the first external tooth 211 is meshed with the first internal tooth 111. At this time, the first external tooth 211 is formed to have tooth number smaller than that of the first internal tooth 111 wherein the difference of the tooth number therebetween may be 1 or 2. Since the tooth number of the first external tooth 211 is smaller than that of the first internal tooth 111, the center of the first external tooth gear portion 210 is revolved with having a revolution radius of a predetermined distance around a center of the first internal tooth gear portion 110 and the first external tooth gear portion 210 is rotated while it revolves, which will be described in detail later.

The second external tooth gear portion 220 is formed on one side of the first external tooth gear portion 210. As shown in FIG. 3, the first external tooth gear portion 210 and the second external tooth gear portion 220 may be laminated and at this time the second external tooth gear portion 220 may be formed integrally with the first external tooth gear portion 210 or manufactured separately and connected to one side of the first external tooth gear portion 210. In the drawing, an example is illustrated, in which the first external tooth gear portion 210 and the second external tooth gear portion 210 are connected each other by the guide pin 13 to rotate integrally. At this time, the first external tooth gear portion 210 and the second external tooth gear portion 220 are rotated without being eccentric, having the same rotation center. The second tooth 221 is formed on an outer peripheral surface of the second external tooth gear portion 220 and the second external tooth 221 is meshed with the second internal tooth 411 which will be described later. The number of the second external tooth 221 may be smaller than that of the first external tooth 211. The number of the second external tooth 221 may be identical to or larger than that of the first external tooth 211, however, in this case a diameter of the output portion 400 which will be described later becomes large and thus the number thereof may be smaller than that of the first external tooth 211 so as to miniaturize the reducer 1. However, it is not limited necessarily to the case in the present embodiment, where the number of the second external tooth 221 is smaller than that of the first external tooth 211. The number of the second external tooth 221 may be determined properly considering a reduction ratio.

The input portion 300 is connected rotatably to the first hollow portion 101 of the first body portion 100. Here, a first bearing 21 may be interposed between the input portion 300 and the first hollow portion 101 so as for the input portion 300 to be connected rotatably to the hollow portion. The input portion 300 may be coupled to an output shaft of a driving source or the output shaft itself of the driving source may be used as the input portion 300.

An eccentric shaft portion 310 is formed on one side of the input portion 300. The eccentric shaft portion 310 is formed to protrude at an eccentric location toward a radial direction from a shaft center of the input portion 300. Accordingly, when the input portion 300 rotates, the eccentric shaft portion 310 revolves with having a revolution radius of eccentric distance from the shaft center of the input portion while the eccentric shaft portion 310 rotates integrally with the input portion 300.

At least one of the first external tooth gear portion 210 and the second external tooth gear portion 220 is connected rotatably to the eccentric shaft portion 310. Here, a second bearing 22 may be used for the first external tooth gear portion 210 or the second external tooth gear portion 220 to be connected to the eccentric shaft portion 310. In the embodiment shown in FIG. 3, the second bearing 22 is connected to an inside of the first external tooth gear portion 210 and the second external tooth gear portion 220 such that the second bearing 22 is caught over a part of an inner peripheral surface of the first external tooth gear portion 210 and a part of an inner peripheral surface of the second external tooth gear portion 220.

As described above, at least one of the first external tooth gear portion 210 and the second external tooth gear portion 220 is connected rotatably to the eccentric shaft portion 310 such that the eccentric shaft portion 310 tends to revolve while the eccentric shaft portion is eccentric from the shaft center of the input portion 300 in accordance with the rotation of the eccentric shaft portion 310 depending on the rotation of the input portion 300, and at this time the number of the first external tooth 211 is smaller than that of the first internal tooth 111 such that the first external tooth 211 is meshed partly with the first internal tooth 111 and thus the first external tooth gear portion 210 and the second external tooth gear portion 220 are rotated and revolved simultaneously.

Referring the reducer 1 according to the present embodiment, the first external tooth gear portion 210 is meshed with the first internal tooth gear portion 110 while the first external tooth gear portion 210 and the second external tooth gear portion 220 are connected to the eccentric shaft portion 310 such that the rotation number of the input portion 300 is reduced firstly. In more detail, for example, in a case where the number of the first internal tooth 111 is 34 and the number of the first external tooth 211 is 33, when the first external tooth gear portion 210 revolves one time, the rotation number of the first external tooth gear portion is reduced as much as (the number of the first internal tooth 111-the number of the first external tooth 211)/the number of the first internal tooth 111, comparing to the rotation number of the input portion 300. That is, the first external tooth gear portion 210 has the rotation speed corresponding to 1/34 of the rotation speed of the input portion 300 and thus the first external tooth gear portion rotates in the speed reduced by 1/34 of the rotation speed of the input portion 300. As a result, the second external tooth gear portion 220 rotating integrally with the first external tooth gear portion 210 rotates in the speed reduced by 1/34 of the rotation speed of the input portion 300.

The output portion 400 is arranged rotatably on one side of the second external tooth gear portion 220. At this time, the output portion 400 may be supported by a second body portion 500 so as to rotate at its location. In more detail, the second body portion 500 is connected to the first body portion 100 while the second body portion is arranged on one side of the output portion 400. At this time, as shown in the drawings, the second body portion 500 may be shaped to surround an external portion of the output portion 400 and the output portion 400 is supported by the second body portion 500 with being surrounded at an external portion so as to rotate at its location. However, the output portion 400 needs not to be supported by only the second body portion 500 so as to rotate at its location. The second body portion 500 serves to form an external shape of the reducer 1 according to the present embodiment while the second body portion surrounds at least a part of the external portion of the output portion 400, and a separate supporting means (not shown) for the output portion 400 to rotate at its location may be further included.

A second internal tooth 411 is formed on an inner peripheral surface of the output portion 400. Here, the second internal tooth 411 may be formed directly on the output portion 400 or a second internal tooth gear portion on which the second internal tooth 411 is formed may be manufactured separately and connected to one side of the output portion 400. The second external tooth 221 is meshed with the second internal tooth 411 and at this time the number of the second internal tooth 411 may be greater than that of the second external tooth 221. In other words, the number of the second external tooth 221 may be smaller than that of the second internal tooth 411, and the difference between them, for example, may be 1 or 2. The number of the second external tooth 221 is smaller than that of the second internal tooth 411 and thus the second external tooth 221 and the second internal tooth 411 rotate while they are meshed partly with each other when the second external tooth gear portion 220 rotates. During this procedure the output portion 400 is rotated forcibly by the second external tooth gear portion 220. Due to the number difference between the second internal tooth 411 of the output portion 400 and the second internal tooth 221 of the second external tooth gear portion 220 the rotation speed of the output portion 400 is reduced further comparing to the rotation speed of the second external tooth gear portion 220. In more detail, the rotation speed of the output portion 400 is reduced as much as 1-(the number of the first internal tooth 111/ the number of the first external tooth 211) X (the number of the second external tooth 221/the number of the second internal tooth 411), comparing to the rotation speed of the input portion 300, and for example, in a case where the numbers of the first internal tooth 111 and the second external tooth 211 are the same as the previous embodiment, the number of the second external tooth 221 is 27 and the number of the second internal tooth 411 is 28, the rotation speed of the output portion 400 is reduced by 1-(34/33) X (27/28) as much as 1/154 of the rotation speed of the input portion. That is, the reducer 1 according to the present embodiment has a high reduction ratio of 154:1 when the numbers of the tooth are given as in the above embodiment.

Meanwhile, referring to the reducer 1 according to the present embodiment the revolution center of the second external tooth gear portion 220 corresponds to the rotation center of the output portion 400 through the tooth ratio of the second external tooth 221 and the second internal tooth 411, the tooth design, the diameter designs of the second external tooth gear portion 220 and the output portion 400. The rotation center and revolution center of the second external tooth gear portion 220 correspond to them of the first external tooth gear portion 210, and the rotation center of the second internal tooth gear portion 411 that rotates with being meshed with the second external tooth gear portion 220 corresponds to the rotation center of the input portion 300 and thus the rotation center of the input portion 300 corresponds to the rotation center of the output portion 400.

Accordingly, the reducer 1 according to the present embodiment has advantages that the rotation centers are corresponded with a simple structure including the external tooth gear portions 210, 220 of two stages without adopting a complicate structure for corresponding the rotation center of the output portion 400 to the rotation center of the input portion 300 as in a related art.

Further, referring to the reducer 1 according to the present embodiment the first external tooth 211 and the first internal tooth 111 may be designed as involute tooth, the second external tooth 221 and the second internal tooth 411 may be designed as involute tooth, or all of them may be designed as involute tooth. The internal tooth and external tooth included in the present embodiment are designed as involute tooth and thus the reducer can be easily manufactured comparing to a conventional reducer having a cycloid tooth.

Meanwhile, the reference numbers 31, 32 designate a snap ring and a washer, respectively, for preventing the separation between the eccentric shaft portion 310 and the second bearing 22 and for defining the movement therebetween.

While the present invention has been described with respect to the specific embodiments, it will be apparent to those skilled in the art that various changes and modifications may be made without departing from the spirit and scope of the invention as defined in the following claims.

## Claims

1. A reducer comprising:
a first body portion on which a first internal tooth is formed;
a first external tooth gear portion on which a first external tooth which is meshed with the first internal tooth and the number of which is smaller than that of the first internal tooth is formed and in which the rotation speed of the first external tooth is reduced firstly while the first external tooth is tooth-engaged with the first internal tooth;
a second external tooth gear portion on which a second external tooth is formed and which is formed on one side of the first external tooth gear portion to rotate integrally and coaxially with the first external tooth gear portion;
an input portion which is connected rotatably through the first body portion and on one side of which an eccentric shaft portion that is eccentric from a shaft center and protrudes is formed wherein at least one of the first external tooth gear portion and the second external tooth gear portion is connected rotatably thereto;
an output portion on which a second internal tooth to be meshed with the second external tooth is formed and in which the rotation speed of the second internal tooth is reduced secondly while the second internal tooth is tooth-engaged with the second external tooth; and
a second body portion that surrounds at least a part of the external portion of the output portion while the second body portion is connected to the first body portion,
wherein the number of the second external tooth is smaller than that of the second internal tooth and the rotation centers of the input portion and the output portion are the same.

2. The reducer of claim 1, wherein the first internal tooth and the first external tooth are formed as involute tooth.

3. The reducer of claim 1, wherein the difference of the numbers of the first internal tooth and the first external tooth is 1 or 2.

4. The reducer of claim 1, wherein the second internal tooth and the second external tooth are formed as involute tooth.

5. The reducer of claim 1, wherein the number of the second external tooth is smaller than that of the first external tooth.

6. The reducer of claim 1, wherein the number of the second external tooth is smaller than that of the second internal tooth.

7. The reducer of claim 6, wherein the difference of the numbers of the second external tooth and the second internal tooth is 1 or 2.

8. A reducer comprising:
a first internal tooth gear portion on which a first internal tooth is formed;
a first external tooth gear portion on which a first external tooth which is meshed with the first internal tooth is formed and in which the rotation speed of the first external tooth is reduced firstly while the first external tooth is tooth-engaged with the first internal tooth;
a second external tooth gear portion on which a second external tooth is formed and which rotates integrally and coaxially with the first external tooth gear portion;
an input portion on one side of which an eccentric shaft portion that is eccentric from a shaft center and protrudes is formed wherein at least one of the first external tooth gear portion and the second external tooth gear portion is connected rotatably to the eccentric shaft portion;
a second internal tooth gear portion on which a second internal tooth which is meshed with the second external tooth is formed and in which the rotation speed of the second internal tooth is reduced firstly while the second internal tooth is tooth-engaged with the second external tooth; and
an output portion to one side of which the second internal tooth gear portion is connected and which rotates together with the second internal tooth gear portion, wherein the number of the first external tooth is smaller than that of the first internal tooth, the number of the second external tooth is smaller than that of the second internal tooth, and the rotation centers of the input portion and the output portion are the same.

9. The reducer of claim 8, further comprising: a first body portion to one side of which a first internal tooth gear portion is connected and through which the input portion is connected rotatably; and
a second body portion that is connected to the first body portion while the second body portion surrounds partly the external portion of the output portion.

10. The reducer of claim 8, wherein the number of the first external tooth is smaller than that of the first internal tooth by 1 or 2.

11. The reducer of claim 8, wherein the number of the second external tooth is smaller than that of the first external tooth and the number of the second external tooth is smaller than that of the second internal tooth by 1 or 2.

12. The reducer of claim 8, wherein the second external tooth gear portion is formed integrally on one side of the first external tooth gear portion or is manufactured separately and is connected integrally thereto.

13. The reducer of claim 8, wherein the revolution center of the second external tooth gear portion and the rotation center of the output portion are corresponded, the rotation center and the revolution center of the second external tooth gear portion are corresponded to them of the first external tooth gear portion, and the rotation center of the second internal tooth gear portion which rotates with being meshed with the second external tooth gear portion is corresponded to the rotation center of the input portion so that the rotation center of the input portion is corresponded to the rotation center of the output portion.

14. The reducer of claim 9, wherein a first bearing is arranged between the first body portion and the input portion and a second bearing is arranged between the rotation shaft portion of the input portion and the first external tooth gear portion or the second external tooth gear portion.
